# FASCICULE DE BREVET EUROPEEN

(11) **EP 0 421 872 B1**
(45) Date de publication et mention de la délivrance du brevet: **22.09.1993**
(21) Numéro de dépôt: 90402730.7
(22) Date de dépôt: 03.10.1990
(51) Int. Cl.: B25J 17/02, B25J 15/00, B24B 27/04, B23Q 1/14

(54) **Tête de fraisage, notamment pour robot d'usinage**
Fräskopf, insbesondere für Bearbeitungsroboter
Milling tool, especially for a machining robot

(30) Priorité: 04.10.1989 FR 8912956
(43) Date de publication de la demande: 10.04.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Delaval, Jacques, F-91120 - Palaiseau (FR); Lienhart, Guy, F-94450 - Limeil Brevannes (FR); Nioche, Jean-Yves Marie, F-91530 - St Maurice Montcouronne (FR); Pontier, Jean-Marie, F-91000 - Evry (FR)
(74) Mandataire: Moinat, François

(56) Documents cités:
- EP-A- 0 274 057
- DE-A- 3 710 688
- FR-A- 2 104 145
- GB-A- 2 013 535
- US-A- 3 984 006
- US-A- 4 243 923
- US-A- 4 865 512

## Description

La présente invention concerne une tête de fraisage constituée d'un ensemble d'usinage adapté au moyen d'un support de fixation sur une machine-outil et particulièrement à l'extrémité d'un bras mobile de robot, notamment pour l'usinage de chanfreins sur pièces.

FR-A-2 639 573 cite un état de la technique dans le domaine concerné par la présente invention se rapportant au montage d'un porte-outil sur un bras de robot, notamment dans les applications d'usinage, la liaison pouvant être rigide ou souple avec plusieurs degrés de liberté. FR-A-2 639 573 a décrit un support souple à deux flasques, possédant un seul degré de liberté du mouvement du porte-outil par rapport à l'extrémité du bras de robot Le problème résolu par cette solution connue était d'obtenir un réglage d'effort, de manière notamment à faire travailler un outil d'usinage à effort constant, ce qui détermine une adaptation à un contour géométrique d'arête usinée sur une pièce.

On connait également par FR-A-2 555 083, dans une application à l'usinage automatique par robot, un exemple de montage d'une perceuse suspendue à la Cardan à un chariot fixé sur le bras manipulateur du robot.

DE-A 3.710.688 décrit un montage d'un ensemble d'usinage sur un bras de robot au moyen d'un support fixe et d'un support souple axialement écarté du support fixe et comportant un vérin pneumatique.

Un des buts de l'invention est de proposer une solution alternative, notamment en utilisant des moyens différents, à la solution connue par FR-A-2 639 573 et présentant en outre les avantages suivants :
- absence de liaison tournante par articulation libre,
- répartition améliorée des masses et position du centre de gravité des parties mobiles de l'ensemble de tête d'usinage sur un axe où passent les efforts, d'où résultent de nouvelles possibilités d'usinage à grande vitesse avec élimination des effets dynamiques parasites et d'usinage en multiples positions de la tête d'usinage.

Une tête de fraisage du genre précédemment décrit et dont le support de fixation se compose d'une première partie susceptible de se fixer sur l'extrémité du bras de robot et présentant une forme générale de chape, à l'intérieur de laquelle est disposée une deuxième partie enserrant ledit ensemble d'usinage, est caractérisée en ce que les deux parties sont reliées par au moins un élément de barre de torsion, la deuxième partie possédant un degré de liberté par rapport à la première partie et les masses des parties mobiles, deuxième partie du support et ensemble d'usinage, sont réparties de manière telle que leur centre de gravité est situé sur une ligne d'axe dudit élément de barre de torsion.

Avantageusement, chaque élément de barre de torsion comporte deux premières parties d'extrémité, chacune placée et bloquée dans un logement ménagé sur chaque partie de support respectivement et une troisième partie plus courte, réunissant les deux premières et de section plus faible, formant ainsi deux ressorts de torsion à axes confondus, portant la partie mobile du support.

D'autres dispositions avantageuses concernent l'adjonction d'un capteur de mesure dimensionnelle, d'une butée de précontrainte et d'au moins une butée mécanique limitant le déplacement de la deuxième partie mobile du support par rapport à la première partie fixe.

D'autres caractéristiques et avantages de l'invention seront mieux compris à la lecture de la description qui va suivre d'un mode de réalisation de l'invention, en référence aux dessins annexés sur lesquels :
- la figure 1 représente une vue en élévation, en coupe par un plan perpendiculaire à l'axe de l'ensemble d'usinage, d'une tête de fraisage conforme à l'invention,
- la figure 2 représente une vue en position horizontale de l'ensemble d'usinage proprement dit intégré dans la tête de fraisage représentée sur la figure 1 ;
- la figure 3 représente une vue latérale de la partie fixe de support de la tête de fraisage représentée sur la figure 1 ;
- la figure 4 représente une vue de détail d'un ressort de torsion entrant dans la tête de fraisage représentée sur les figures 1 et 3 :
- la figure 5 représente une vue de détail montrant des éléments complémentaires montés sur la tête de fraisage des figures 1 et 3;
- les figures 6, 7 et 8 représentent schématiquement des courbes de fonctionnement montrant les efforts à l'outil;
- la figure 9 représente une vue schématique d'un banc de réglage utilisé dans un procédé d'usinage à l'aide de la tête de fraisage conforme à l'invention ;
- la figure 10 montre le détail X de la figure 9.

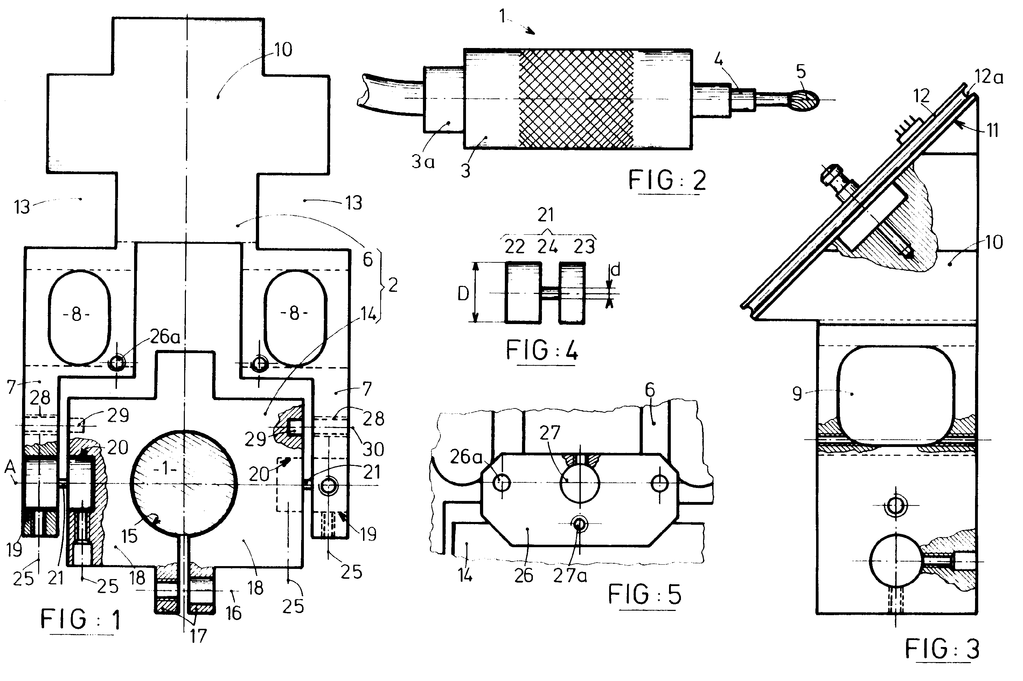

Un robot d'un type connu en soi, non représenté aux dessins et utilisé notamment pour réaliser par fraisage des chanfreins de géométrie précise sur des pièces mécaniques, destinées notamment à des applications aéronautiques, comporte un bras mobile à l'extrémité duquel est adaptée une tête de fraisage, objet de l'invention et schématiquement représentée sur la figure 1. Ladite tête de fraisage se compose principalement d'un ensemble d'usinage 1 porté par un support de fixation 2 en deux parties. L'ensemble d'usinage 1 d'un genre connu en soi et dont la définition ne fait pas l'objet de la présente invention peut comporter, comme schématiquement représenté sur la figure 2, un corps principal 3 comprenant notamment un moteur d'entraînement en rotation d'une broche 4 qui porte un outil coupant d'usinage, par exemple une fraise 5, ledit corps 3 étant prolongé à son autre extrémité opposée audit outil 5 par un élément 3a de raccordement et d'alimentation de puissance.

Ledit support 2 de fixation et de raccordement de l'ensemble d'usinage 1 au bras mobile du robot se compose principalement de deux parties solidarisées. Une première partie 6 présente une forme générale de chape ouverte. Chaque aile 7 de chape comporte dans l'exemple de réalisation représenté sur les dessins des parties ajourées avec des évidements 8 de face ou latéralement 9, comme visible sur la figure 3, permettant une répartition judicieuse des masses pour la résistance et les fonctions recherchées du support et notamment un allégement de la première partie fixe 6. La partie supérieure 10 de ladite première partie 6 de support comporte notamment une face supérieure 11 inclinée sur laquelle est fixée une pièce 12, de définition connue en soi, de raccordement et de fixation de la tête de fraisage sur l'extrémité du bras mobile du robot. Entre lesdites ailes 7 de chape et ladite partie supérieure 10, la première partie fixe 6 de support comporte des parties évidées 13 d'allègement.

Ladite pièce de raccordement 12 comporte à sa périphérie une rainure 12a destinée à supporter la tête de fraisage sur un ratelier de stockage ou magasin, en attente de fixation sur le bras de robot, ces accessoires du poste d'usinage n'étant pas représentés sur les dessins.

Une deuxième partie 14 dudit support 2 de fixation est disposée entre les ailes 7 de la première partie 6 de support. Cette deuxième partie 14 présente la forme générale d'une chape fermée comportant un alésage 15 dans lequel est serré le corps 3 de l'ensemble d'usinage 1, ladite chape 14 étant fermée par exemple au moyen de boulons 16 réunissant les rebords inférieurs 17 des ailes 18 de la chape.

Chaque aile 7 de la première partie 6 du support de fixation 2 est percée d'un trou débouchant 19 auquel correspond sur chaque aile 18 de la deuxième partie 14 un trou borgne 20 de même diamètre. Un élément de liaison 21 du type barre de torsion est engagé dans lesdits trous 19 et 20. Cet élément 21 représenté en détail sur la figure 4 comporte une première partie cylindrique 22 placée dans le trou 19 de la première partie 6 de support qui constitue son logement et une deuxième partie cylindrique 23 de même diamètre D placée dans le trou 20 de la deuxième partie 14 de support qui sont réunies par une troisième partie 24 cylindrique, plus courte que les précédentes et de plus faible diamètre d. La valeur de d est notamment comprise entre D/7 et D/10 et le matériau dudit élément de liaison 21 est choisi de manière à présenter des caractéristiques mécaniques de résistance et de déformation élastique telles que l'élément 21 puisse constituer un ressort de torsion. Chaque élément 21 est bloqué respectivement par rapport à la première partie 6 de support et à la deuxième partie 14 de support dans les logements 19 et 20 au moyen d'au moins une vis 25 de blocage, par exemple. De cette manière, la première partie 6 de support solidarisée à l'extrémité du bras de robot est fixe par rapport à ce bras de robot et la deuxième partie 14 de support portant l'ensemble d'usinage 1 et porté par lesdits ressorts de torsion 21 est mobile suivant un unique degré de liberté de mouvement autour de l'axe géométrique A commun desdits ressorts de torsion 21 par torsion de ces éléments 21, notamment sous l'effet d'un effort sur l'outil de coupe 5 en cours d'usinage.

La mise en oeuvre de la tête de fraisage conforme à l'invention qui vient d'être décrite en référence aux figures 1 à 4 suit les principes résumés ci-après, en adjoignant à la tête de fraisage quelques éléments complémentaires qui seront précisés.
La répartition des masses de la tête de fraisage est faite de manière telle que pour une masse maximale supportable par le bras de robot, la part prépondérante est représentée par la deuxième partie mobile 14, compte-tenu des contraintes de dimensionnement de l'ensemble, ce qui conduit à l'allégement de la première partie fixe 6. En outre, le centre de gravité des parties mobiles, deuxième partie 14 de support et ensemble d'usinage 1, est placé sur l'axe géométrique A commun aux ressorts de torsion 21. Ces répartitions de masse permettent d'éviter les effets vibratoires qui auraient pour effet d'entraîner des stries en cours d'usinage, au niveau des surfaces de coupe. La courbe de réponse caractérisant les ressorts de torsion 21 est déterminée en fonction de la valeur du chanfrein à réaliser sur pièces lors d'une utilisation de la tête de fraisage conforme à l'invention et de la précision de position de l'arête de pièce.

Sur chaque face avant et arrière de la première partie 6 fixe de support, comme représenté sur la figure 5 de détail, est fixée, au moyen de vis 26a, une plaque 26 qui porte, l'une, une butée mécanique 27 en appui sur la deuxième partie 14 mobile de support et qui permet une mise en précontrainte des ressorts de torsion 21, l'autre, un capteur 27a de mesure dimensionnelle qui permet de contrôler les variations de position relatives de la première partie 6 fixe et de la deuxième partie 14 mobile de support qui correspondent aux variations de l'outil 5 et par étalonnage à une mesure de l'effort. Ce capteur 27a est également utilisé lors des opérations de programmation de trajectoire par apprentissage. La valeur de la précontrainte à appliquer au moyen de la butée 27 est également déterminée en fonction de la dimension du chanfrein à réaliser et de la précision de position de l'arête de pièce sur laquelle le chanfrein est exécuté.

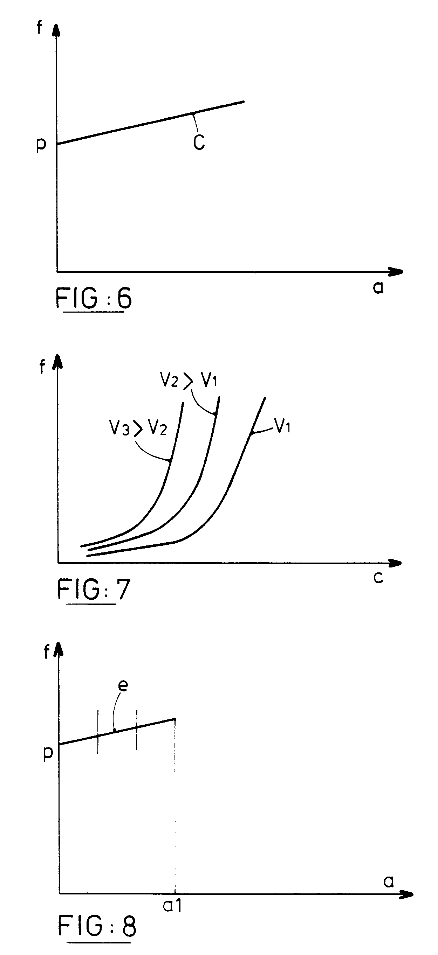

Les dispositions constructives qui viennent d'être décrites ainsi que les caractéristiques de réglage appliquées résultent notamment des considérations technologiques suivantes :
- la mise en précontrainte p des ressorts de torsion 21 conduit à une courbe C caractéristique d'effort f a l'outil en fonction de son déplacement a, représentée sur le schéma de la figure 6 ; la précontrainte p permet de travailler à effort f élevé, même à faible valeur de déplacement a. Le niveau élevé de l'effort f contribue à une stabilité de fonctionnement de l'outil 5 ;
- les courbes typiques d'effort f à l'outil en fonction de la valeur du chanfrein c et des vitesses d'avance v₁, v₂, v₃, représentées sur le schéma de la figure 7 amènent à deux constatations :
   . la dimension du chanfrein c est peu sensible à une faible variation d'effort f ;
   . un choix d'effort f élevé implique la mise en oeuvre de vitesses élevées d'avance v.

Il en découle les dispositions opératoires suivantes :
- la raideur des ressorts 21 est généralement déterminée de manière à générer de faibles variations d'effort f;
- le travail à effort f "quasi constant" conduit à obtenir une trajectoire d'outil de type "suivi de profil" ; ce mode de travail permet de s'accommoder de larges tolérances sur la géométrie des pièces ainsi que sur les trajectoires programmées ;
- la programmation de trajectoire est simplifiée en utilisant le mode "apprentissage point à point" et le capteur de mesure 27a permet de régler avec précision, en chaque point d'apprentissage, la valeur du déplacement a d'outil ;
- le capteur de mesure 27a peut également être utilisé en tant que dispositif d'asservissement de la trajectoire du robot, à l'effort f de l'outil 5 .

Le diagramme de la figure 8 précise le domaine e de fonctionnement de l'outil 5 à l'intérieur d'un déplacement a₁ programmé.

Afin d'éviter notamment un endommagement accidentel des ressorts de torsion 21, une butée mécanique est également disposée entre la première partie 6 fixe et la deuxième partie 14 mobile de support. Un exemple de réalisation de butée est représenté sur la figure 1. Les ailes 7 et 18 respectivement de la première partie 6 et de la deuxième partie 14 de support comportent des trous correspondants, l'un 28 débouchant et taraudé sur l'aile 7 et l'autre 29 borgne et lisse sur l'aile 18. Une vis à ergot 30 fixée dans ces trous constitue une butée de chaque côté limitant le débattement de la deuxième partie mobile 14 par rapport à la première partie fixe 6 du support et limitant de ce fait les efforts susceptibles de s'exercer sur les ressorts de torsion 21 de liaison entre les deux parties 6 et 14 de support.

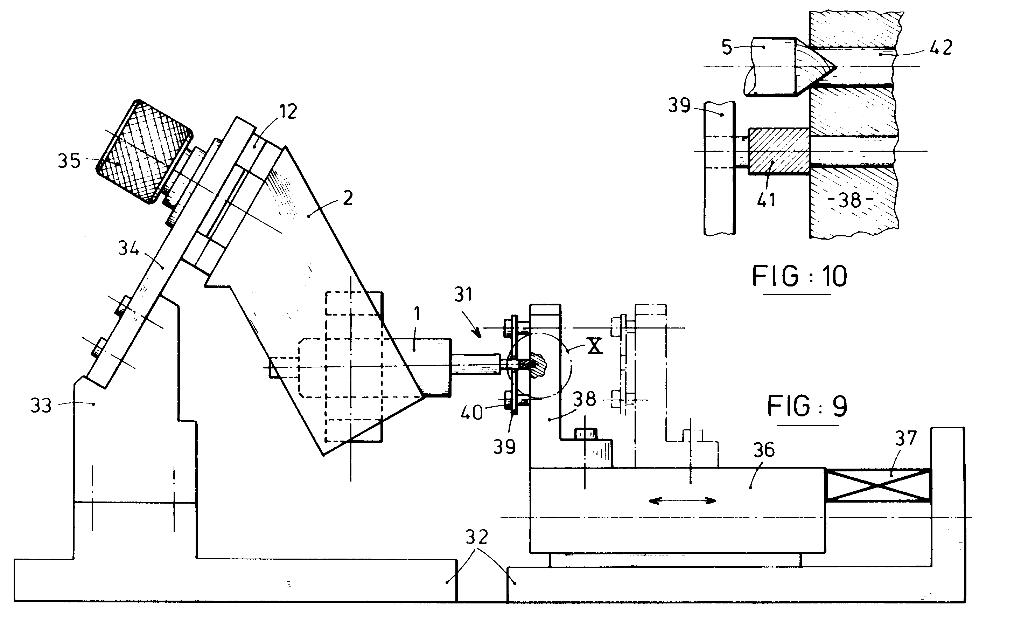

Dans un exemple d'application de la tête de fraisage conforme à l'invention à une opération d'usinage sur pièces aéronautiques, notamment des pièces en superalliage pour moteurs comportant la réalisation de chanfreins de l'ordre de 0,5mm, un effort appliqué sur l'outil de 1 à 4N est obtenu et les paramètres de mise en oeuvre sur le robot d'usinage en résultent, notamment une déviation de valeur déterminée de la deuxième poutre 14 mobile du support 2 par rapport à la première partie fixe 6. Une vitesse de déplacement de l'outil 5 de 10 à 100 mm par seconde est utilisée. L'axe de l'outil 5 reste toujours en position normale au plan bissecteur d'arête de pièce et l'axe géométrique A de rotation de la deuxième partie mobile 14 de support reste toujours parallèle à la tangente de la trajectoire décrite par l'extrémité d'outil. La valeur du chanfrein obtenu est déterminé pour chaque application et résulte pour un outil donné et un matériau donné du choix des paramètres de mise en oeuvre, vitesse d'avance et effort appliqué. Le choix de ces paramètres pour une valeur donnée de chanfrein permet d'obtenir une bonne précision de l'ordre de ± 0,1 mm et un bon état de surface de valeur inférieure à 3,2 micromètre CLA. La figure 9 montre un exemple d'utilisation de la tête de fraisage comportant l'ensemble d'usinage 1 monté sur son support de fixation 2 conforme à l'invention qui vient d'être décrit en référence aux figures 1 à 5. Le procédé d'usinage utilisant ladite tête de fraisage nécessite une étape préalable de réglages représentée sur ladite figure 9. Pour réaliser ces réglages, le support de fixation 2 portant l'ensemble d'usinage 1 muni d'un outil 5 est placé sur un banc de réglage 31 comportant un bâti 32 portant un support fixe 33. Le support 2 est fixé sur ledit support fixe 35 par l'intermédiaire d'une plaque support 34 et au moyen d'une molette de maintien 35. Ledit banc 31 comporte en outre un chariot mobile 36 dont la position est par exemple fixée au moyen d'une cale de réglage 37 ou par tout moyen connu en soi de déplacement à glissières et de réglage de position à vernier . Ledit chariot 36 porte un support centreur 38 associé à une bague de maintien 39 munie de vis de serrage 40. Comme représenté sur le détail de la figure 10, ledit support 38 du centreur 41 comporte un trou 42 dans lequel l'extrémité de l'outil 5 vient en butée, ce qui permet d'effectuer les réglages de position géométrique de l'arête d'outil 5 par rapport aux axes géométriques de la pièce de raccordement et de fixation 12 du support de fixation 2 sur l'extrémité du bras de robot et également d'obtenir le réglage de la pression d'outil en réglant la mise en précontrainte des ressorts de torsion 21 dudit support de fixation 2.

## Revendications

1. Tête de fraisage comportant un ensemble d'usinage (1) d'un genre connu en soi pour usinage axial ou pour chanfreinage relié par un support de fixation (2) sur une machine-outil et particulièrement à l'extrémité d'un bras mobile de robot d'usinage, ledit support (2) se composant d'une première partie (6) susceptible de se fixer sur l'extrémité du bras de robot et présentant une forme générale de chape à deux ailes (7) à l'intérieur de laquelle est disposée une deuxième partie (14) enserrant ledit ensemble d'usinage (1), caractérisée en ce que les deux parties (6,14) sont reliées par au moins un élément (21) de barre de torsion la deuxième partie (14) possédant un degré de liberté par rapport à la premiere partie (6) et les masses des parties mobiles, deuxième partie (14) de support et ensemble d'usinage (1), sont réparties de manière telle que leur centre de gravité est situé sur une ligne d'axe A dudit élément (27) de barre de torsion.

2. Tête de fraisage selon la revendication 1 dans laquelle chaque élément (21) de barre de torsion comporte deux premières parties (22, 23) d'extrémité, chacune placée et bloquée dans un logement ménagé l'un (19) sur la première partie (6) et l'autre (20) sur la deuxième partie (14) de support et une troisième partie (24) plus courte, réunissant les deux premières parties (22, 23) et de section plus faible de manière à former entre les deux parties (6, 14) de support deux ressorts (21) de torsion à axe géométrique A commun.

3. Tête de fraisage selon la revendication 2 dans laquelle les deux premières parties (22, 23) cylindriques d'extrémité de chaque élément (21) de barre de torsion ont un même diamètre D et la troisième partie (24) cylindrique a un diamètre d compris entre D/7 et D/10.

4. Tête le fraisage selon l'une quelconque des revendications 1 à 3 dans laquelle ladite première partie (6) de support comporte des parties évidées (13) et des évidements (8) des ailes (7) et la deuxième partie (14) de support comporte deux faces externes d'ailes (18) opposées latérales placées chacune en regard d'une face interne des ailes (7) de la première partie et dans laquelle les masses de l'ensemble, support (2) et ensemble d'usinage (1), sont réparties de manière telle que pour une masse maximale supportable par le bras de robot, la part prépondérante est représentée par la deuxième partie mobile (14), compte-tenu des contraintes de dimensionnement de l'ensemble.

5. Tête de fraisage selon l'une quelconque des revendications 1 à 4 dans laquelle au moins une butée mécanique (30) limite l'amplitude des déplacements de la deuxième partie (14) mobile du support (2) par rapport à la première partie (6) et une butée (27) est disposée en outre entre les deux parties (6, 14) de support de manière à introduire une précontrainte des ressorts (21) en absence de l'effort sur l'outil de coupe (5) en cours d'usinage.

6. Tête de fraisage selon l'une quelconque des revendications 1 à 5 dans laquelle un capteur (27a) de mesure dimensionnelle est disposé entre la première partie (6) fixe et la deuxième partie (14) mobile dudit support (2).

7. Tête de fraisage selon l'une quelconque des revendications 1 à 6 dans laquelle la première partie du support (6) comporte une pièce de raccordement (12) sur le bras de robot comportant en périphérie une rainure (12a) permettant de la supporter sur un ratelier de stockage.

8. Procédé d'usinage sur robot utilisant une tête de fraisage comportant un ensemble d'usinage (1) muni d'un outil (5) monté sur un support de fixation (2), conforme aux revendications 1 à 7 caractérisé en ce que l'étape d'usinage est précédée par une étape de réglage de la position de l'outil (5) par rapport à la position de la pièce de raccordement et de fixation (12) du support de fixation (2) sur l'extrémité du bras de robot et de la pression d'outil, les réglages étant obtenus en plaçant ledit ensemble (1) à tête de fraisage fixé sur son support (2) sur un banc de réglage (31) comportant un bâti (32) portant un support fixe (33) puis en amenant ledit outil (5) en butée sur un trou ménagé sur un élément centreur porté par un chariot mobile à position réglage par rapport audit support fixe (33), lesdits réglages permettant de régler la mise en précontrainte des ressorts de torsion (21).

## Claims

1. Milling head comprising a machining assembly (1) of a type which is known per se for axial machining or for chamfering, connected by a fastening support (2) onto a machine tool, and in particular at the end of a moving robot machining arm, the said support (2) being composed of a first part (6) capable of being fastened onto the end of the robot arm and having a general double-flange cap shape (7), inside which is arranged a second part (14) framing the said machining assembly (1), characterised in that the two parts (6, 14) are connected together by at least one torsion bar element (21), the second part (14) having one degree of freedom with respect to the first part (6) and the masses of these moving parts, second support part (14) and machining assembly (1), are distributed so that their centre of gravity is situated on an axial line A of the said torsion bar element (27).

2. Milling head according to Claim 1, in which each torsion bar element (21) comprises two first end parts (22, 23), each placed and locked in a housing, one (19) made on the first part (6), and the other (20) made on the second part (14) of the support, and a shorter third part (24) joining the two first parts (22, 23), and with a smaller cross section so as to form between the two support parts (6, 14), two torsional springs (21) with a common geometrical axis A.

3. Milling head according to Claim 2, in which the two first cylindrical end parts (22, 23) of each torsion bar element (21) have the same diameter D, and the third cylindrical part (24) has a diameter d of between D/7 and D/10.

4. Milling head according to any one of Claims 1 to 3, in which the said first support part (6) comprises recessed parts (13) and recesses (8) in the flanges (7), and the second support part (14) comprises two lateral opposite external flange faces (14), each placed facing one internal face of the flange (7) of the first part, and in which the masses of the support (2) and machining assembly (1) unit are distributed so that for a maximum mass which can be supported by the robot arm, the dominant part is represented by the second moving part (14), taking into account the constraints of dimensioning the assembly.

5. Milling head according to any one of Claims 1 to 4, in which at least one mechanical stop (30) limits the amplitude of movement of the second moving part (14) of the support (2) relative to the first part (6) and a stop (27) is furthermore arranged between the two support parts (6, 14) so as to introduce prestressing of the springs (21) in the absence of a force on the cutting tool (5) during machining.

6. Milling head according to any one of Claims 1 to 5, in which a dimensional measurement sensor (27a) is arranged between the first stationary part (6) and the second moving part (14) of the said support (2).

7. Milling head according to any one of Claims 1 to 6, in which the first part of the support (6) comprises a piece (12) for connection onto the robot arm, comprising at its periphery a groove (12a) allowing it to be supported in a storage rack.

8. Method for machining with a robot using a milling head comprising a machining assembly (1) fitted with a tool (5) mounted on a fastening support (2), in accordance with Claims 1 to 7, characterised in that the machining step is preceded by a step of adjusting the position of the tool (5) relative to the position of the piece (12) for connection and fastening of the fastening support (2) onto the end of the robot arm, and the tool pressure, the adjustments being obtained by placing the said milling head assembly (1) fastened on its support (2) on an adjustment bench (31) comprising a framework (32) carrying a stationary support (33), then by bringing the said tool (5) into abutment on a hole made on a centring element carried by a moving carriage whose position can be adjusted relative to the said stationary support (33), the said adjustments allowing the prestressing of the torsional springs (21) to be adjusted.

## Patentansprüche

1. Fräskopf mit einer Bearbeitungseinheit (1) an sich bekannter Art zur axialen Bearbeitung oder zum Abfasen, die durch einen Befestigungshalter (2) mit einer Werkzeugmaschine und im besonderen mit dem Ende eines beweglichen Arms eines Bearbeitungsroboters verbunden ist, wobei der Halter (2) einen an dem Ende des Roboterarms befestigbaren ersten Teil (6) aufweist, der im wesentlichen die Form eines Bügels mit zwei Schenkeln (7) hat, in dessen Innern ein zweiter Teil (14) zum Einspannen der Bearbeitungseinheit (1) angeordnet ist,
**dadurch gekennzeichnet**,
daß die beiden Halterteile (6, 14) durch wenigstens ein Torsionsstabelement (21) miteinander verbunden sind und der zweite Teil gegenüber dem ersten Teil (6) einen Freiheitsgrad der Bewegung besitzt
und daß die Massen der beweglichen Teile, nämlich des genannten zweiten Halterteils (14) und der Bearbeitungseinheit (1) so verteilt sind, daß ihr Schwerpunkt auf einer Achslinie A des Torsionsstabelements (21) liegt.

2. Fräskopf nach Anspruch 1, bei dem jedes der Torsionsstabelemente (21) einerseits zwei erste Endteile (22, 23), die jeweils in einer Aufnahme angeordnet und blockiert sind, von denen die eine (19) an dem ersten (6) und die andere (20) an dem zweiten Halterteil (14) ausgebildet ist, und andererseits einen die beiden Endteile (22, 23) miteinander verbindenden kürzeren Teil (24) mit kleinerem Querschnitt aufweist, derart daß zwischen den beiden Halterteilen (6, 14) zwei Torsionsfedern (21) mit gemeinsamer geometrischer Achse (A) gebildet werden.

3. Fräskopf nach Anspruch 2, bei dem die beiden ersten zylindrischen Endteile (22, 23) jedes Torsionsstabelements (21) gleiche Durchmesser D haben und der zylindrische dritte Teil (24) einen Durchmesser d besitzt, der zwischen D/7 und D/10 liegt.

4. Fräskopf nach einem der Ansprüche 1 bis 3, bei dem der erste Halterteil (6) ausgesparte Teile (13) sowie Aussparungen (8) in den Schenkeln (7) aufweist, bei dem ferner der zweite Halterteil (14) zwei entgegengesetzte seitliche Schenkelaußenseiten (18) aufweist, die jeweils einer Innenseite der Schenkel (7) des ersten Halterteils (6) gegenüberliegen, und bei dem die Massen der Baugruppe, d.h. des Halters (2) und der Bearbeitungseinheit (1) so verteilt sind, daß der überwiegende Teil der Masse, die der Roboterarm maximal tragen kann, von dem beweglichen zweiten Halterteil (14) gebildet wird, wobei die Bemessung den Beanspruchungen Rechnung trägt.

5. Fräskopf nach einem der Ansprüche 1 bis 4, bei dem wenigstens ein mechanischer Anschlag (30) die Amplitude der Bewegung des beweglichen zweiten Teils (14) des Halters (2) relativ zu ersten Halterteil (6) begrenzt, und bei dem außerdem zwischen den beiden Halterteilen (6, 14) ein Anschlag (27) derart angeordnet ist, daß die Torsionsfedern (21) mit einer Vorspannung beaufschlagt werden, wenn im Verlauf der Bearbeitung die auf das Schneidwerkzeug (5) einwirkende Kraft nicht vorhanden ist.

6. Fräskopf nach einem der Ansprüche 1 bis 5, bei dem zwischen dem festen ersten Teil (6) und dem beweglichen zweiten Teil (14) des Halters (2) ein Meßfühler (27a) angeordnet ist.

7. Fräskopf nach einem der Ansprüche 1 bis 6, bei dem der erste Halterteil (6) ein Verbindungsstück (12) zur Verbindung mit dem Roboterarm aufweist, das eine umlaufende Nut (12a) besitz, die seine Halterung an einem Aufbewahrungsgestell ermöglicht.

8. Verfahren zur Bearbeitung mit Hilfe eines Roboters unter Verwendung eines Fräskopfs nach einem der Ansprüche 1 bis 7, mit einer Bearbeitungseinheit (1), die mit einem an einem Befestigungshalter (2) montierten werkzeug (5) ausgestattet ist,
**dadurch gekennzeichnet**,
daß dem Verfahrensschritt der eigentlichen Bearbeitung ein Verfahrensschritt zur Einstellung der Position des Werkzeugs (5) relativ zu der Position des der Befestigung des Halters (2) an dem Ende des Roboterarms dienenden Verbindungsstücks (12) und zur Einstellung des Werkzeugdrucks vorangeht,
wobei diese Einstellungen dadurch bewerkstelligt werden, daß man
die an ihrem Halter (2) befestigte Einheit (1) mit dem Fräskopf auf einer Einstellbank (31) plaziert, die ein Gestell (32) aufweist, das einen festen Support (33) trägt,
und dann das Werkzeug (5) an einem Loch zur Anlage bringt, das an einem Zentrierelement angebracht ist, das von einem beweglichen Schlitten getragen wird, der relativ zu dem festen Support (33) in eine Einstellposition bewegbar ist, wobei die genannten Einstellungen das Einstellen der Vorspannung der Torsionsfedern (21) ermöglichen.
